Europäisches Patentamt

European Patent Office

Office européen des brevets

(19)

(11) Publication number: **0 066 977**
**B2**

(12) # NEW EUROPEAN PATENT SPECIFICATION

(45) Date of publication of the new patent specification: **14.09.88**

(51) Int. Cl.⁴: **B 29 C 67/22**

(21) Application number: **82302495.5**

(22) Date of filing: **17.05.82**

(54) **Method and apparatus for preparing thermoplastic foams.**

(30) Priority: **18.05.81 JP 75442/81**

(43) Date of publication of application:
**15.12.82 Bulletin 82/50**

(45) Publication of the grant of the patent:
**08.05.85 Bulletin 85/19**

(45) Mention of the opposition decision:
**14.09.88 Bulletin 88/37**

(84) Designated Contracting States:
**BE DE FR GB IT LU NL**

(56) References cited:
**DE-B-1 135 652**
**DE-B-1 803 896**
**DE-B-2 739 998**
**FR-A-1 433 132**
**US-A-2 669 751**
**US-A-3 051 453**
**US-A-3 286 992**
**US-A-4 201 480**

(73) Proprietor: **SEKISUI KASEIHIN KOGYO KABUSHIKI KAISHA**
**25, 1-chome**
**Minami Kyobate-cho Nara-shi (JP)**

(72) Inventor: **Hayashi, Motoshige**
**18-7, Gakuen Asahi-cho**
**Nara-shi (JP)**
Inventor: **Tanaka, Shigetoshi**
**8-208, Hokuwa Danchi 1424, Tohkujoh-cho**
**Nara-shi (JP)**
Inventor: **Yoshii, Motokazu**
**360, Daianji Tawaramoto-cho**
**Shiki-gun Nara-den (JP)**
Inventor: **Doi, Tsuneo**
**1153-68, Ooaza Komahane Souwa-cho**
**Sashima-gun Ibaragi-ken (JP)**

(74) Representative: **Senior, Alan Murray et al**
**J.A. KEMP & CO 14 South Square Gray's Inn**
**London WC1R 5EU (GB)**

EP 0 066 977 B2

**Description**

This invention relates to a method of and apparatus for preparing thermoplastic foams.

Various methods have been employed for preparing thermoplastic foams. An extruder is used in many of these methods because this allows the thermoplastic foams to be prepared continuously, and hence advantageously. In one method using an extruder, a thermoplastic resin is heated and melted in the extruder, a foaming agent is injected into the molten resin to form a mixture in which the foam agent is uniformly mixed with the resin under pressure, the mixture is then forced through a die to be given the desired cross-sectional shape and it is then extruded from the die. The extruded resin foams in the air, outside the extruder.

In this method, in order to prepare a uniform mixture on injecting the foaming agent into the resin in the extruder, it is necessary for the resin to be at a very high temperature and in a sufficiently molten state. However, when the resin containing the foaming agent is extruded out of the die, the resin should not be at such a high temperature. More particularly, when extruded from the dye the resin must be soft enough to be foamed, but not at such a high temperature that it cannot maintain its shape. Thus, in methods of preparing foamed articles using an extruder, the resin containing the foaming agent has to be cooled in the extruder on the way to the die.

This cooling must be carried out equally and uniformly throughout the resin mass because otherwise the resin composition containing the foaming agent cannot be foamed uniformly. For this reason, various methods and apparatus have been proposed for uniformly cooling the molten resin composition. Some apparatus for this purpose have a rotatable member which can be heated and cooled provided in a barrel of a mixer of the extruder, which can also be heated and cooled. The rotating member generally has a number of blades on its outer surface. Each of the blades projects towards the inner surface of the barrel and extends substantially axially of the rotating member. The blades are located in a zigzag pattern in the axial sense.

Japanese Patent Publication No. 48—544 discloses the use of flat plates for the blades, and that the plates should be secured to the outer surface of the rotating member so that the surface of each of the blades is tangential to the outer surface of the member. This publication describes these tangential blades as "rotating wings," and mentions that perforations may be provided in the plates. Japanese Patent Publication No. 54—42026 on the other hand discloses that the blades should be made of flat plates, which project perpendicularly from the outer surface of the rotating member, and further suggests that the blades should be provided with perforations which are alternately inclined outwardly and inwardly.

Uniform cooling can apparently be attained in a mixer formed by a barrel with a bladed rotatable member therein when cooling is carried out at least from the barrel side of the apparatus. However, in cases where a large amount of resin is extruded to provide a foamed article with a large cross-section, it is not possible uniformly to foam both the surface part and inner part of an article with such a mixer. Thus further improvement is required in order to give a uniform foam over a large cross-sectional area by an extrusion method with high efficiency.

Apart from the cooling mixer mentioned above, it is also known that a zigzag mixer may be used for cooling resin. For example, Japanese Laid-Open Patent Application No. 53—148755, discloses a zigzag mixer having a structure essentially comprising a conduit with tortuous passages formed therein. However, when a foamable molten resin is passed through such a zigzag mixer and cooled from the outside thereof by circulating a cooling medium into a conduit, the resin passed through the mixer tends to be unevenly foamed, having a low density at an inner portion thereof and a high density at an outer surface portion thereof. Moreover, the product obtained includes disadvantageous shear lines resembling weld lines at places in the product where plates in the zigzag mixer were positioned. Thus, in using the zigzag mixer for cooling and mixing a molten foamable resin, the resin can be cooled but a uniformly cooled and mixer foam having a large cross-section can not be obtained.

Moreover, it is also known that a zigzag mixer can be directly mounted on the forward end of an extruder for simply mixing a resin, i.e. without using the mixer for cooling the resin. This is disclosed for example, in Japanese Laid-Open Patent Application No. 52—133364, but in such a case efficient and sufficient cooling can not be attained, and it is not possible to foam a foamable resin uniformly.

It is an aim of the present invention to provide a method of and an apparatus for producing a more uniform foamable thermoplastic resin, particularly for products of large cross-sectional dimension.

According to the present invention there is provided a method for preparing a thermoplastic foam by extruding molten thermoplastic resin having a foaming agent distributed therein including the steps of:

(a) introducing a mass of molten thermoplastic resin from a supply into a mixing and cooling zone and controlling the temperature of the cooling zone by fluid heat exchange, the mass being under pressure in said supply zone and in the cooling zone;

(b) passing the pressurized mass through said mixing and cooling zone while simultaneously intimately mixing the mass and lowering the temperature of the mass, the cooled mass being maintained in its molten flowable state)

(c) dividing the cooled mass into a plurality of separate, non-parallel streams in a zigzag mixer under substantially adiabatic conditions;

(d) separating and recombining at least a portion of said streams in said zigzag mixer under substantially adiabatic conditions to form a combined homogeneous mass having a substantially uniform temperature; and

(e) extruding the homogeneous mass into a lower pressure zone to form a substantially uniform thermoplastic foam.

According to the present invention there is also provided apparatus for preparing a substantially uniform thermoplastic foam from a supply of mixed molten thermoplastic resin having therein a foaming agent for said resin, said apparatus including a cooling-mixing means to be connected to said supply to receive said mass for mixing and substantially lowering the temperature of the mass, substantially adiabatic zigzag mixing means connected to said cooling-mixing means for dividing the cooled mass into a plurality of separate non-parallel streams and for separating and recombining at least a portion of said streams under substantially adiabatic conditions to form a combined homogeneous mass having a substantially uniform temperature, and die means connected to said zigzag mixing means for extruding said combined homogeneous mass into a lower pressure zone to form a substantially uniform thermoplastic foam.

The supply zone of the molten resin will generally be an extruder. In preferred embodiments the streams of resin are further redivided, separated and recombined, and they can be rotated about the axis of the main flow during the separating and recombining, and these steps of dividing, separating and recombining are carried out substantially adiabatically. The resultant substantially uniform thermoplastic foam is preferably a board having a thickness greater than 10 mm.

In apparatus of the invention the cooling-mixing means can include an elongate barrel having an inlet at one end for connection to said supply, an outlet at the opposite end connected to said zigzag mixing means, a jacket surrounding said barrel and having a cooling medium inlet and a cooling medium outlet, a cylindrical member rotatably mounted in said barrel on the axis thereof, said member defining with said barrel a passage for the mass, a pipe extending into the interior of said rotating member for supplying cooling medium thereto, and a plurality of projections mounted on the outer surface of the member extending into said passage to a position adjacent the inner surface of the barrel, each projection also extending generally axially of the said rotating member.

The separating member can be made up of sheets, such as corrugated sheets overlying one another, sets of such with the sheets of a set in a plane, interengaging with one another, or the member can be in the form of a block which is provided with apertures.

Extrudable, foamable thermoplastic resins incorporating volatile fluid foaming agents are well known. Examples are the solid homopolymers of styrene, polyethylene, polypropylene, copolymers of ethylene and propylene, and polycaprolactam. Among known foaming agents are dichlorodifluoromethane, methylchloride and butane.

In the preparation of foams of polymers, it is often desirable to add various modifying materials such as finely divided materials such as calcium silicate, talc, dyes, pigments or fire retardants. Sometimes lubricants such as stearic acid or monoglyceride are added and talc may be added as a cell-size controlling agent. Such additives can be added to the thermoplastic resin in the extruder to effect desired properties in the final foam.

In using the method or apparatus of the present invention substantially improved uniformity of product is obtained whether the product is a foam or a foamable resin. For foamed materials, nonuniformities are most readily determined by judging cell size uniformity and distribution and determining the density of the foamed article or sectional pieces thereof. The article is usually sectioned, inspected visually, and the density of the various sections is determined.

In order that the invention may be more clearly understood, the following description is given by way of example only with reference to the accompanying drawings wherein:

Figure 1 shows a partial, cross-sectional view of one embodiment of apparatus of the present invention;

Figures 2 and 3 are respectively enlarged, perspective views of the separating member and the blade portion shown in Figure 1;

Figure 4 is a cross-sectional view of the blade portion shown in Figure 3, shown with a partial cross-section of the barrel and the rotating member;

Figures 5 and 6 are enlarged perspective views of another separating member which may be used in apparatus of the present invention;

Figure 7 is a partial, cross-sectional view of a second embodiment of apparatus according to the present invention;

Figure 8 is a partial, cross-sectional view of a blade portion of the apparatus shown in Figure 7; and

Figure 9 is a partial, cross-sectional view of another cooling mixer which can be used in apparatus of the present invention.

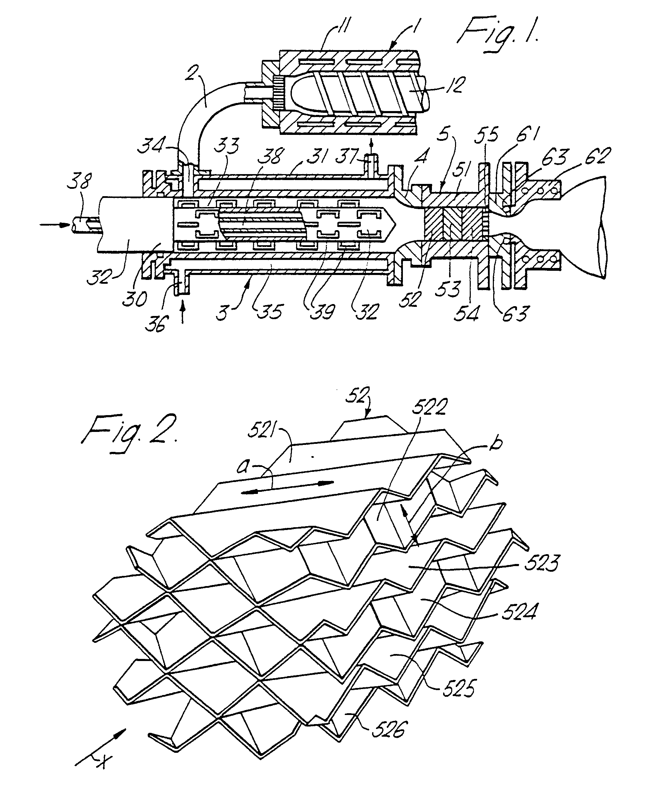

As shown in Figure 1, a supply extruder 1 includes a barrel 11 with a screw 12 rotatably provided therein. A connecting pipe 2 serves to introduce resin from the extruder 1 to a resin inlet 34 of a cooling mixer 3. The cooling mixer 3 comprises a barrel 31 with a member 32 rotatably provided coaxially within the barrel. A joint 4 serves to connect the cooling mixer with a zigzag mixer 5, which comprises a short conduit 51 with separating members 52, 53, 54 provided therein.

In the cooling mixer 3, between the barrel 31 and the rotating member 32 is a resin passage 33, which is in communication with the resin inlet 34. The barrel 31 is provided with a surrounding jacket defining a passage 35 for the circulation of a cooling medium, the passage 35 communicating with a cooling medium inlet 36 and a cooling medium outlet 37. One end of rotating member 32 extends to outside the barrel 31 to form a driving portion, but a greater part of the rotating member 32 lies within barrel 31 to form a mixing portion. Between the driving portion and the mixing portion, a supporting portion 30 closely supports and holds the rotating member 32 in the barrel 31.

The rotating member 32 has a hollow internal space in which a pipe 38 is inserted. The forward end of pipe 38 is in the vicinity of the forward end of the internal space of the rotating member 32. The pipe 38 is provided for circulating a cooling medium within the rotating member 32.

A number of blades 39 are provided on the outer surface of the mixing portion of the rotating member 32. Each of the blades 39 is as shown formed into a hurdle-shape, with a top bar extending parallel to the axis of the rotating member axis. Supports are provided at both ends of the top bar and project radially, being secured to the outer surface of the rotating member.

The zigzag mixer 5 is formed by a short conduit 51 and separating members 52, 53, 54 inserted in the conduit. Each of the separating members 52, 53, 54 can be formed by a number of corrugated sheets of metal 521, 522, .. etc., as shown in Figure 2. The sheets are placed one on another so that corrugations between continuous sheets may be extended in varied directions. The corrugated sheets are mutually secured at their contacting points. Particularly, for example, when corrugated sheet 521 is placed with the valleys and peaks thereof extending in the direction shown by the arrow *a*, another corrugated 522 is positioned adjacent to and under sheet 521 with its valleys and peaks thereof extending in the direction shown by the arrow *b* inclined to direction *a*. These sheets are welded together at their mutual contacting points and thus secured in this cross state. Furthermore, a third corrugated sheet 523 is positioned adjacent to and under sheet 522 with its valleys and peaks thereof also extending in the direction shown by the arrow *a*. The third sheet 523 is welded in the same manner to sheet 522 in a cross state. Likewise, further corrugated sheets 524, 525, 526 are underlaid successfully and welded so that an integral article is made, which is a separating member 52. Thus separating member 52 includes a plurality of passages formed by adjacent sheets, the adjacent passages therebetween extending in varying direction and with the passages having varying heights.

Separating members 53 and 54 are also formed in the same manner as separating member 52. These separating members are placed in the short conduit 51 in the following manner. Separating members 52 and 53 are arranged contiguously and in mutual contact so that passages in one member may communicate with passages in the other member in series and in a cross relation. Thus, the members 52 and 53 can be aligned such that a plane including both directions *a* and *b* of one separating member 52 is perpendicular to an imaginary plane including both directions *a* and *b* of the other separating member 53. Thereafter, the separating members 52, 53 are welded together at their contact points to form an integrated member, in which they are connected in this perpendicular crossing relation. Likewise, the third separating member is in a perpendicular crossing relation and similarly attached. A perforated stopper plate 55 is inserted and fixed in the short conduit 51, and the integrated member, comprising the members 52, 53, 54 joined together, is inserted in the conduit 51 and held by the stopper 55. When inserted, for example, as shown in Figure 2, the separating member 52 is located in such a manner that the direction indicated by the arrow *x* (Figure 2) is parallel to the longitudinal axis of the short conduit 51.

In a zigzag mixer 5 thus formed, directions *a* and *b* in which peaks and valleys in sheets 521, 522 . . . etc. extend are inclined with respect to the axis *x* of short conduit 51. Thus, a number of resin passages are formed in separating member 52 between the sheets 521, 522 .. etc. The resin passages comprise many obstructions to flow, due to the tortuosity of the sheets, so that resin flowing therein is forced to adopt turbulent flow. Moreover, since the edges of the sheets are mutually adjacent and in a crossing relation between adjacent separating members, a resin stream passed through one passage is divided by a sheet crossing the passage and lying in the following separating member, and it is simultaneously incorporated with another resin stream passing through neighboring passages. Thus, the resin is mixed thoroughly while passing through the separating members and forms a uniform mixture.

A die 61 is connected to the downstream end of the short conduit 51. The die 61 includes a passage 62 for circulation of a cooling medium. Thus, the inner walls of the die 61 can be cooled if desired. A final sizer 62 can be connected to the outlet of the die 61 and can also be cooled, if desired. The die 61 and the sizer 62 are of entirely conventional design.

The process according to the present invention is explained hereinbelow referring to Figure 1. A foamable thermoplastic resin containing a foaming agent is extruded in a molten state from the supply extruder 1 into connecting pipe 2. The resin in the connecting pipe 2 is introduced through the resin inlet 34 to the cooling mixer 3 and advanced in cooling mixer 3 by the extruding force of supply extruder 1.

The resin advances through the resin passage 33 between the barrel 31 and the rotating member 32. A number of blades 39 extending in the axial direction are provided on the outer surface of rotating member 32. The rotating member 32 is rotated about its longitudinal axis, and the resin is mixed by the blades 39. Cooling medium is fed into the barrel 31 from the cooling medium inlet 36 and is discharged from the cooling medium outlet 37. Cooling medium is also fed into the rotating member 32 by the pipe 38, passed around the outside of pipe 38 and discharged. Thus, while passing through the cooling mixer, the resin is cooled by both the barrel 31 and the rotating member 32, and it is simultaneously intimately mixed by the blades 39 to form a uniform resin composition, which is then discharged from the cooling mixer 3.

The resin discharged from the cooling mixer 3 is passed through the joint 4, to the zigzag mixer 5. In the zigzag mixer 5, the resin is at first passed through passages separated by sheets in the separating member 52, wherein the sheets are corrugated and welded in a crossing state with their peaks and valleys extending in varied directions. The resin is divided into separate streams and flows irregularly to form a turbulent flow and is mixed thoroughly. In addition, since the sheets in the separating member 52 extend in directions different by 90° from sheets in the following separating member 53, when the resin flows from one separating member 52 to another separating member 53, it is at least partially combined and redivided to pass between the sheets of separating member 53.

Likewise, in flowing from the separating member 52 into the separating member 53, the streams of resin are again at least partially combined and redivided to pass between the sheets of the separating member 54. Thus, because of the turbulence of the flow and of the repeated division and combination of the resin streams, the resin is more thoroughly mixed in the zigzag mixer 5 to form a much more uniform composition.

The passage of the resin through the zigzag mixer is preferably a substantially adiabatic process. Thus, the resin is neither strongly cooled from outside nor from inside so that, when discharged from zigzag mixer 5, the resin has a generally uniform temperature, including at its surface portions close to the conduit 51 and its inner portions close to the axis of the conduit 51. In conventional processes, since the resin was strongly cooled by equivalents to the barrel 31 and the rotating member 32 in the cooling mixer 3, it was unavoidable that a temperature gradient was produced in the resin even with stirring by the blades 39. In contrast thereto, the present invention provides additional adiabatical mixing by the separating members, so that the resin attains greater uniformity of temperature.

The resin discharged from zigzag mixer 5 is introduced into die 61. Since the resin has a uniform temperature in the die 61, even if the die 61 has a large orifice to give a product having a large cross-sectional area, the resin can be foamed uniformly. A product can thus be obtained in which little or no difference is seen in density, or in cell size and cell distribution between inner and outer parts thereof. Further, since the resin is not strongly cooled in the zigzag mixer, the product has little trace of shear lines or weld lines which could be formed by the sheets in the separating member. As a result, a uniform foam having large cross-sectional dimensions can be obtained.

When a cooling medium is circulated in the passage 63 in the die 61, a thin skin of relatively high density can be formed on the outer surface of the resulting foamed article. The skin brings about the remarkable advantage that the foamed article is not only strengthened, but also it acquires surface hardness and resistance to fracture.

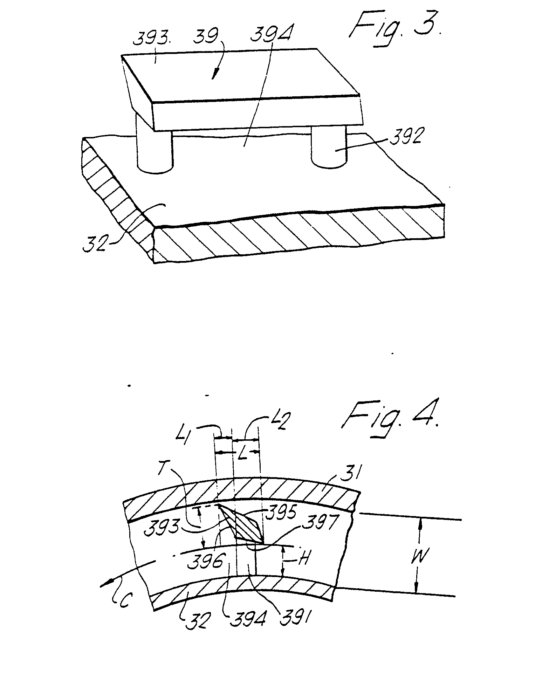

Figure 3 shows blades for use of the member 32 of the cooling mixer 3 which have a hurdle-like shape having an opening, although it is not essential to have the opening and the blade may simply be a plate. The blades 39 in Figure 1 are provided so as to be evenly distributed on the outer surface of mixing portion of the rotating member 32, and are located at pertinent places chosen both axially and circumferentially so that the blades 39 may scrape off resin in contact with the inner surface of the barrel 31.

In the embodiment shown in Figure 1, the blades 39 are located circumferentially of rotating member 32 so as to be distributed evenly in annular rows. In the axial sense, the blades 39 are located in a zigzag alternating relation. That is, blades 39 are arranged in such a relation that, when viewed in the direction along the axis, the blades belong to one annular row are positioned between the blades belonging to neighboring annular rows. When viewed in a direction following the circumference, the forward end of the blades belonging to one annular row just overlaps the rear ends of the blades of the next annular row.

As shown on a larger scale in Figure 3, the blades 39 are in the form of a hurdle-like frame having a top bar 393 and two supports 391 and 392, which hold the ends of the top bar. The supports 391 and 392 are pillars having an annular cross-section, and are equal in height and in diameter, being positioned on the outer surface in pairs aligned parallel to the axis of the rotating member 32. The top bar 393 is located with its longitudinal direction parallel to the axis of rotating member 32. An opening 394 is thus formed between top bar 393 and the outer surface of the rotating member 32. The top bar 393 preferably has a length more than one and half times and less than five times the length of a support 391 or 392.

The relationship between the blades 39 and the barrel 31 is as follows:

In Figure 4, the rotating member 32 is rotated in the direction of arrow $c$, and the upper face 395 of the top bar 393 is positioned close to the inner surface of barrel 31. It is preferred that the forward end of the upper face 395 is closest to the barrel 31, and that the upper face forms slants downwardly and rearwardly. The front face 396 of top bar 393, which faces the direction of rotation, joins with upper face 395 at an acute angle and also forms slants downwardly and rearwardly. The lower face 397 of top bar 393, which faces the outer surface of the rotating member 32, may be formed as an extension of front face 396, and accordingly merge into front face 396.

The opening 394 in blade 39 has a height $H$, the minimum value of which is greater than half the height $W$, which is the height of the resin passage 33 between rotating member 32 and barrel 31. In Figure 4, since the lower face 397 of the top bar 393 slopes, the height $H$ is smallest at the rear edge of lower face 397, but is more than half the height $W$ of the resin passage 33. In relation to the top bar 393, which is positioned close to the inner surface of the barrel 31, the difference between passage height $W$ and opening height $H$ is approximately equal to the thickness $T$ of top bar 393, and accordingly the thickness $T$ is less than half the passage height $W$. The passage height $W$ may normally fall within a range from 20 to 100 mm, preferably from 30 to 50 mm.

The top bar 393 has a length $L$, measured in the rotating direction of rotatable axis 32. The length $L$ should be more than one-third and less than twice the passage height $W$. As is shown in Figure 4, when downward face of the top bar 393 is formed by the front face 396 and the lower face 397, the length $L_2$, which corresponds to the length of lower face 397 measured in the rotating direction, preferably has a ratio in a range between 1 and 2 and 2 to 1 to the length $L_1$, which corresponds to a length of front face 396 measured in the rotating direction.

Figure 3 shows a hurdle-shaped blade, in which top bar 393 is supported by two supports 391 and 392; however, the blade used herein may be of other types, for example, a T-shaped one, in which top bar 393 is supported by a single support.

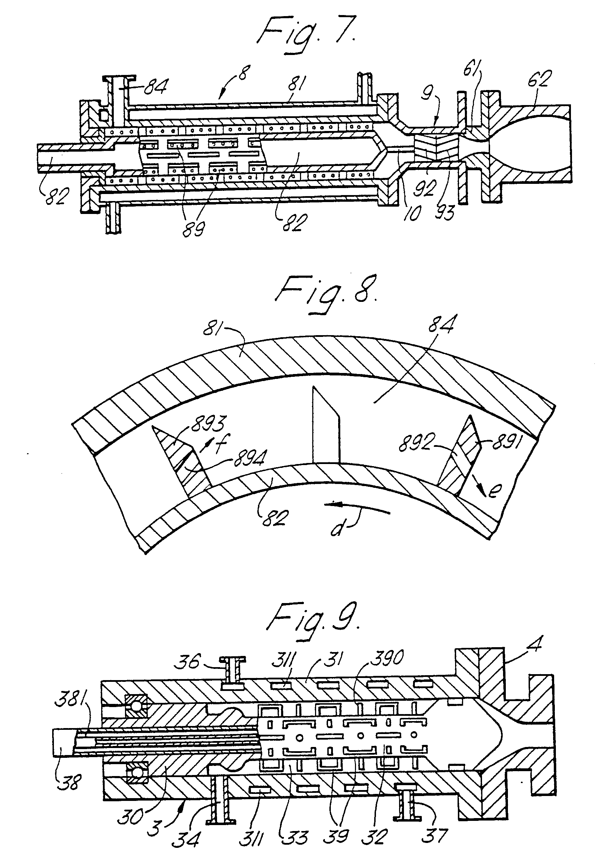

The blade may alternatively be a plate provided with a plurality of perforations as shown at 89 in Figure 7. The perforations are preferably inclined obliquely in each of the blades. Blades having upwardly inclined perforations, in the direction of advance, are arranged alternately with blades having downwardly inclined perforations. Thus in Figure 8 if the member 82 is rotated in the barrel 81 in the direction of arrow $d$, perforation 892 in blade 891 is inclined downwardly in the direction of arrow $e$, and perforation 894 in blade 893 adjacent to blade 891 is inclined upwardly in the direction of arrow $f$. When the perforations are so provided the resin can be mixed more uniformly, because when passed through the perforations, it is more finely divided by the perforations and flows towards the barrel 81 and the rotating member 82 alternately.

Figure 1 shows a rotating member 32 having a single end supported. However, the rotating member may have both ends supported in which case a resin outlet must be provided on a lateral side of barrel 31.

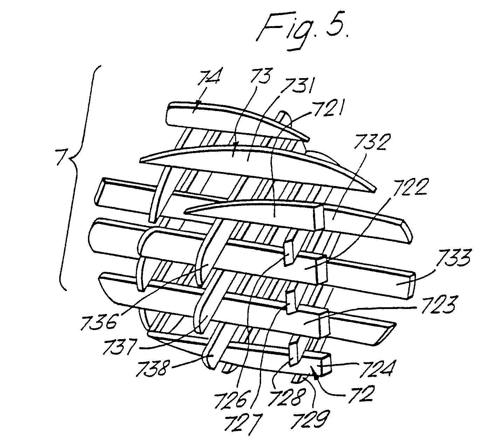

The separating member in the zigzag mixer 5 may be, for example, as indicated by reference numeral 7 in Figure 5. This is composed of crossing members 72, 73 and 74. A set of small sheets 721, 722, 723 and 724 are arranged to lie in an imaginary plane at equal intervals, and another set of small sheets 726, 727, 728 and 729 are also arranged similarly to lie on another imaginary plane. The sets of sheets are arranged to cross one another. Each of the sheets belonging to one set is interposed crosswise into the intervals between the sheets belonging to the other set. The contact points are welded to form a crossing member 72. Likewise another similar set of small sheets 731, 732, 733, etc. is arranged at equal intervals and interposed crosswise between a further similar set of small sheets 736, 737, 738, etc. to form another crossing member 73 and still another crossing member 74 is formed in the same manner. These crossing members 72, 73 and 74 are further crossed in such a manner that, for example, a small sheet 736 in crossing member 73 is inserted between small sheets 721 and 722 in crossing member 72, and the resulting members are welded at their contact points to form a separate member, wherein the crossing members are located so as to align the corresponding contact points in the crossing members. The separating member in the zigzag mixer 5 may be of such an assembly of small sheets as is composed of crossing members 72, 73, 74, etc. mentioned above. In the separating member shown in Figure 5, the spaces between small sheets 721 to 738 act as resin passages.

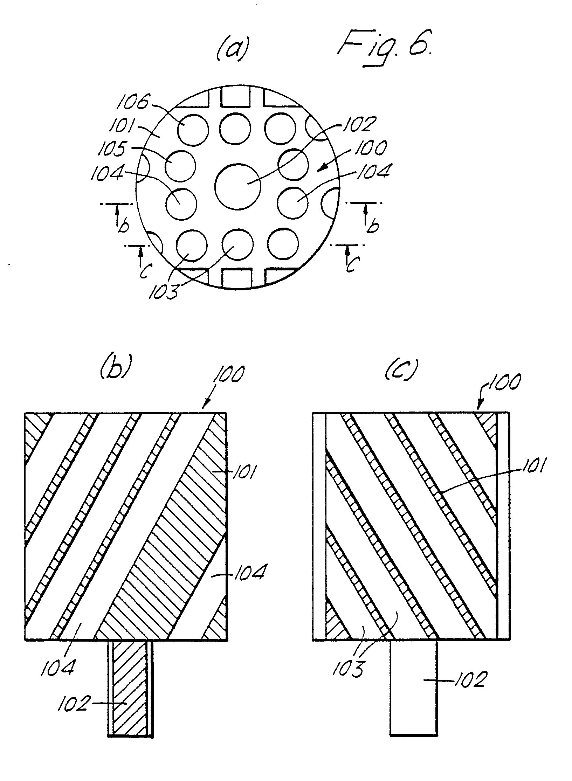

The separating member as shown in Figure 6 may alternatively be used in the zigzag mixer. This is formed by fixing a rod 102 to a cylindrical metal block 101 and providing in the metal block 101 a number of throughbores 103 to 106. The bores 103 to 106 extend obliquely with respect to the axis of the cylindrical metal block 101, and their angles to the axis are varied. For example, perforations 103, which are shown in the end view of Figure 6(a), are slanted to the left upwardly as seen in Figure 6(c), while perforations 104, which are positioned adjacent to perforations 103, are slanted to the right upwardly as shown in Figure 6(b). Accordingly, when the resin stream is separated and passed through perforations 103 to 106, and the thus separated resin is collected after having left the perforations, the resin is thoroughly mixed. Axle 102 serves as a rotating axis when separating member 100 is to be rotated in the barrel.

In addition to the above, mixers such as shown in U.S. Patent No. 3,051,453, can be used as the zigzag mixer. This patent discloses a mixing apparatus which comprises a conduit and a plurality of sheet metal assemblies inserted therein. The apparatus repeatedly divides the resin flowing in the conduit and reunites it. Also, U.S. Patent No. 3,286,992 discloses a similar mixing device, which may be also used for the zigzag mixer in the present invention.

In some embodiments, the separating member in the zigzag mixer may be rotated in the conduit. The separating member may be driven either by connecting it to a separate power source or by connecting it to rotate with the rotating member 82 in cooling mixer 8 by means of the rod 92. In such an embodiment, the resin passed through zigzag mixer 9 may be mixed still more effectively.

Where the rotating member has a large outside diameter, it should be rotated at a very low speed, but normal speeds are of 2 to 10 r.p.m. Preferably any rotation of the separating members in the zigzag mixer should be at a somewhat lower speed than that of the cooling mixer.

The invention is also illustrated more particularly in the following examples.

Example 1

Polystyrene ("Esbrite 7M" made by Sumitomo Kagyo Kogyo Kabushiki Kaisha), was used as a resin. To 100 parts by weight of polystyrene were added 0.5 parts by weight of fine powdery talc as a cell controlling agent and 2.0 parts by weight of SR 103 (trade name, made by Daiichi Kogyo Seiyaku Kabushiki Kaisha) as a flame retardant. The resulting composition was well mixed and fed into an extruder of 50 mm caliber. The polystyrene was melted by heating the barrel of the extruder at 180°C. A foaming agent was injected into the molten polystyrene through an inlet provided at a forward portion of the barrel. A mixture of 30 parts by weight of dichlorodifluoromethane and 70 parts by weight of methyl chloride was used as the foaming agent. The foaming agent was injected under pressure into the mixture in the rate of about 12 parts by weight based on 100 parts by weight of the resin composition. After injection of the foaming agent the resulting mixture was introduced through a connection into another extruder of 65 mm caliber, wherein the mixture was further mixed and cooled. Then the mixture was introduced into a cooling mixer and a zigzag mixer, wherein cooling and mixing was carried out according to the present invention, and thereafter was extruded through a die and foamed.

The cooling mixer was used herein had a structure as indicated at 3 in Figure 9, which is similar to that of the cooling mixer 3 shown in Figure 1, and like reference numerals are given to like parts. In Figure 9, barrel 31 has an inner diameter of 200 mm, and a length of 1000 mm and is provided with a spiral groove 311. A cooling medium was introduced from medium inlet 36, passed throgh groove 311 and discharged from medium outlet 37.

Pipe 38 in rotating member 32 is designed to include an inner pipe 381 extending in the vicinity of the forward end of member 32. A cooling medium passes through the inner pipe 381, and then back outside that inner pipe back with pipe 38. Between barrel 31 and rotating member 32 is formed an annular passage 33 having a radial height of 30 mm. On the outer surface of the rotating member 32 are provided twenty-four hurdle-shaped blades 39, and forty pins 390 between adjacent blades. Each of the blades is 30 mm in height and 100 mm in length, and each of the pins is 30 mm in height and 12 mm in outside diameter. Thus, a gap of 0.1 to 0.3 mm is left between the inner wall of barrel 31 and each of the top bars in the hurdle-shaped blades 39. Rotating member 32 has at the forward end thereof a screw-pin for use in securing a zigzag mixer, which is to be rotated.

Separating members having a structure as shown in Figure 2 were used in order to form a zigzag mixer. Metal sheet assemblies available under the mixer name "SMV" from Swiss company Sulzer were used. Two assemblies were connected in serries but with their directions varied by an angle of 90°. The mixer SMV assemblies were 60 mm in diameter and 60 mm in length. The corrugated sheets were 1.2 mm in thickness, and, referring to Figure 2, the sheets had a pitch of 20 mm between contiguous peaks. Six sheets were placed one upon another so that the extending directions *a* and *b* were inclined on mutually opposite sides by 45° with respect to axial direction X.

The cooling mixer was mounted on the forward end of the extruder and the zigzag mixer was further mounted on the forward end of the cooling mixer and a die was mounted on the forward end of the zigzag mixer, the resin being extruded through these to make a foam. In this case, the resin was extruded from the extruder of 65 mm caliber at a rate of 60 kg per hour, and the rotating member in the cooling mixer was rotated at a rate of 6 revolutions per minute. The resin was extruded under a pressure of 100 kg/cm$^2$ and at a temperature of 140°C. The pressure was 70 kg/cm$^3$ at the exit of the cooling mixer 3 and the temperature was 106°C at the center of the resin passage and 111°C mid-way between center and outer face in the passage 33 of the cooling mixer 3. Accordingly, the resin temperature was fount to vary according to position even at the exit of the cooling mixer 3. However, after having passed through the zigzag mixer, the resin temperature was found to be almost uniform. Thus, the resin temperature was 111°C at the center in the passage at the exit of the zigzag mixer, and 112°C at the middle between the center and the outer face, and 111°C at the outer face.

Thus, the resin had a uniform temperature of 111°C after having passed through the zigzag mixer and was extruded from the die under a pressure of 35 kg/cm$^2$. The die had a rectangular nozzle of 50 mm in width and 2.5 mm in height at the forward end. The extruded resin was foamed and shaped to form a board having a width of 150 mm and a thickness of 90 mm. The board was uniformly foamed both in inner and outer parts thereof and had cells which were within a range from 0.6 to 0.8 mm and uniform in distribution.

In order to ascertain whether the board was foamed uniformly, the foamed board was cut in the extruding direction to obtain several sections, the density of each of which was investigated in the following manner. The foamed board having a thickness of 90 mm was cut in the thickness direction to obtain three equal parts. Among the parts, a middle part having a width of 150 mm was further cut in the width direction to obtain five equal parts, each piece having 3 cm × 3 cm in cross-section, and were numbered 1 to 5 in order from one end thereof and used as testing materials. As the result, it was found that the densities of the materials numbered 1 to 5 were 29.3, 29.0, 28.4, 29.3 (kg/m³), respectively, and that the difference between the maximum and minimum densities was 0.9 kg/m³ and deviation from the mean density of 29 kg/m³ was very small. Accordingly, it was concluded that the board was uniformly foamed.

### Example 2

Foams were prepared and tested in the same manner as described in Example 1, except that the blades 39 in the cooling mixer was changed and pins 390 were removed. Thus, instead of the cooling mixer used in Example 1, which was indicated by reference numeral 3 in Figure 9, a cooling mixer was used having blades 89 with perforations as indicated by reference numeral 8 in Figure 7. Each of blades 89 was of 30 mm height, 100 mm length and 12 mm thickness, and had four perforations of 12 mm diameter. The perforations were inclined upwards or downwards by 30° with respect to a line normal to the plate surface. The slanting directions were the same in each blade, but were varied between adjacent blades. Seventy-two blades were secured to the outer surface of rotatable axis 82.

Eight blades positioned on each of the ends of the rotating members 82 were inclined at 30° to the member 82 to assist in advancing the resin forward.

Using above-mentioned cooling mixer and rotating the rotating member 82 at the rate of 6 revolutions per minute, a foamed board was obtained in the same manner as in Example 1.

At the exit of the cooling mixer, the resin had a temperature of 102°C at the center of the resin passage, and 110°C mid-way between the center of the outer surface. Accordingly, the resin temperature was found to vary in the exit of the cooling mixer. However, after having passed through the zigzag mixer, the resin temperature was found to be largely uniform. Thus, at the exit of the zigzag mixer, the resin temperature was 109°C at the center of the resin passage, 108°C at the outer face, and 110°C at the middle between the center and the outer face.

The resin extruded from the die was foamed uniformly and finely, and had cell sizes within a range from 0.6 to 0.8 mm. Five testing pieces were prepared and observed in the same manner as in Example 1. As a result, it was found that the densities of the materials numbered from 1 to 5 were 30.6, 30.2, 31.5, 30.7, 30.1 (kg/m³), respectively, and that the difference between the maximum and minimum densities was 1.4 kg/m³ and deviation from the mean density 30.6 kg/m³ was very small.

### Example 3

Foams were prepared and tested in the same manner as described in Example 1, except that the zigzag mixer was changed. While in Example 1 there was used a zigzag mixer having separating members shown in Figure 2, in this Example there was used a zigzag mixer having a single separating member as shown in Figure 5. The separating member used herein was manufactured by the Swiss company Sulzer and is available under the mixer name "SMX", and has an outer diameter of 60 mm and a length of 70 mm. Each of sheets 721, 722 ... etc., in the separating member had a thickness of 1.2 mm and four sheets are grouped to form each set, which is inclined at an angle of 45° to the axis of the resin passage.

At the exit of the cooling mixer, the resin had a temperature of 103°C at the center of the resin passage, and 108°C mid-way between the center and the outer face of the resin passage. Accordingly, the resin temperature was found to be nonuniform at the exit of the cooling mixer. In contrast, the resin temperature hardly varied at the exit of the zigzag mixer. Thus, at the exit of the zigzag mixer, the resin had a temperature of 109°C at the center of the resin passage, 109°C at the outer face, and 110°C at the middle between the center and the outer face.

The resin thus extruded from the die was foamed uniformly and finely, to form an article, which had cell sizes within a range from 0.6 to 0.8 mm. Five testing pieces numbered from 1 to 5 were prepared and investigated in the same manner as in Example 1. As a result, it was found that the densities of the materials numbered 1 to 5 were 29.3, 28.6, 28.6, 28.7, 28.1 (kg/m³), respectively, and that the difference between the maximum and minimum densities was 1.2 kg/m³ and hence the deviation from the mean density 29.3 kg/m³ was very small.

### Example 4

In this example, separating members having a structure indicated by reference numeral 52 in Figure 2 were used. A bar extending in the direction of arrow X in Figure 2 was secured to the center at the rear end of the separating member, the bar being further secured to the center at the forward end of the rotating member in the cooling mixer. The separating member was rotated together with the rotating member. Except for the above-mentioned matters, foams were made in the same manner as in Example 1.

At the exit of the zigzag mixer, the resin had a temperature of 106°C at the center of the resin passage, 106°C at the outer face, 107°C at the middle between the center and the outer face, and hence it was found that the resin temperature hardly varied.

The resin extruded from the die was foamed uniformly and finely to form an article, which had cell sizes within a range from 0.6 to 0.8 mm. Five testing pieces numbered from 1 to 5 prepared and observed in the same manner as in Example 1. It was found that the densities of the testing materials numbered 1 to 5 were 29.8, 28.8, 28.7, 28.7, 29.8 (kg/m³), respectively, and that the difference between the maximum and minimum densities was 1.1 kg/m³, hence the deviation from the mean density 29.2 kg/m³ was very small.

## Example 5

In this example, foams were obtained in the same manner as described in Example 1 except that use was made of another resin composition and another die.

Particularly, a low density polyethylene ("Yuka-lon HE 30", made by Mitsubishi Yuka Kabushiki Kaisha) was used for the resin. To 100 parts by weight of the polyethylene were added 0.5 parts by weight of fine powdery talc as a cell controlling agent, and 1.0 parts by weight of stearic acid mono glyceride as a lubricant, and the resulting product was thoroughly mixed to form a composition. The composition was fed into the extruder of 50 mm caliber used in Example 1. Foaming agent was injected into the composition in the extruder. As the foaming agent, butane was injected under pressure in the composition in a rate of 8 parts by weight per 100 parts by weight of resin composition.

The resin was extruded from an extruder of 65 mm caliber under a pressure of 100 kg/m² at the exit and at a rate of 30 kg per hour. The pressure was 40 kg/cm² at the entrance of the die, and the temperature was 135°C at the exit of the extruder of 65 mm caliber. At the entrance to the zigzag mixer, the resin had a temperature of 105°C at the center of the resin passage, 110°C at the outer face, and 112°C at the middle between the center and the outer face. In contrast, at the exit of the zigzag mixer, the resin temperature was equally 107°C at the center, the outer face and the middle between them, and was thus found to be uniform.

The resin was extruded from a nozzle of 1.0 mm height and 100 mm width. The extruded resin was foamed and shaped to a foamed board having 15 mm thickness and 180 mm width. The cell sizes in the board were within a range from 1 to 2 mm. Five testing pieces were prepared from the board and investigated in the same manner as in Example 1. It was found that the densities of the testing pieces were 31.5, 30.8, 31.1, 30.4, 31.2 (kg/m³), respectively, and that they were uniformly foamed.

## Example 6

In this example, a separating member having a structure indicated at 100 in Figure 6 was used. Axle 102 was fixed on the forward end of the rotating member in the cooling mixer, and the separating member was rotated together with the rotating member. Except for the separating member, the method for preparation was carried out in the same manner as in Example 1 to obtain a foamed board.

At the exit of the zigzag mixer, the resin had a temperature of 112°C at the center of the resin passage, 113°C at the outer face, and 114°C at the middle between the center and the outer face.

The resin extruded from the die was seen to be foamed uniformly and finely, and had cell sizes from 0.6 to 0.8 mm, but cells in the central portion were smaller than those in the outer portion. Five testing pieces were prepared and investigated in the same manner as in Example 1. As a result, it was found that the densities of the testing materials were 30.5, 29.2, 28.4, 28.8, 30.0 (kg/m³), respectively, and that the difference between the maximum and minimum densities was 2.1 kg/m³, hence deviation from the mean density 29.4 kg/m³ was relatively small.

## Comparative Example 1

Foams were obtained by carrying out a method in the same manner as in Example 1, except that no zigzag mixer was used in this comparative example.

At the exit of the cooling mixer, the resin had a temperature of 106°C at the center of the resin passage, 110°C at the outer face thereof, and 111°C at the middle between the center and the outer face.

The foams had a cell size from 0.6 to 1.0 mm and it was observed that there were differences in the roughness and fineness of cells in the foams. Five testing pieces numbered from 1 to 5 were prepared for investigation in the same densities of 29.6, 29.2, 33.6, 30.6 and 29.1 (kg/m³), respectively. Thus, it was found that the maximum density difference reached 4.5 kg/m³ and accordingly the density was varied in a wide range compared with the mean density of 30.4 kg/m³.

## Comparative Example 2

Foams were obtained in the same manner as in Example 3, except that no cooling mixer was used in this comparative example.

At the exit from the zigzag mixer, the resin had a temperature of 125°C at the center of the resin passage, 123°C at the outer face thereof, and 120°C at the middle between the center and the outer face.

The foams had rought cells having sizes within a range from 1.0 to 1.6 had an inner portion unevenly foamed, and were found to shrink after 24 hours from foaming. Five testing pieces numbered 1 to 5 were prepared from the foams for investigation, and as a result it was found that the testing pieces No. 1 to 5 had a density of 34.4, 33.2, 32.0, 33.6, 33.8 kg/m³, respectively, and that the maximum difference in density was 2.4 kg/m³ and deviation from the mean density of 33.4 kg/m³ was relatively small.

## Example 7

In this example, foams were prepared in the same manner as in Example 1, except that another die was used, and a cooling medium was circulated in a passage of the die. Particularly, the die was provided with a cooling medium passage 63 in the vicinity of forward end thereof as shown in Figure 1. The die had an orifice of 100 mm width and 0.8 mm thickness.

The same resin composition as in Example 1 was fed into the extruder and extruded under the same conditions as in Example 1, while water at 75°C was circulated in the passage 63. The resin pressure was found to be 75 kg/cm² at the outlet of cooling mixer 3, and the resin temperature was 108°C at the center of the resin passage and 113°C at the middle between said center and the outer face of the resin passage. Thus, it was observed that the resin temperature was varied at the outlet of the cooling mixer 3. It was, however, observed that after having passed through the zigzag mixer, the resin temperature was scarcely varied. More particularly, the resin temperature in the outlet of zigzag mixer was 114°C at the center of the resin passage, 113°C at the middle between said center and outer face, and 114°C at the outer face. The resin discharged from the zigzag mixer had a uniform temperature of 114°C and was extruded from the die under a pressure of 59 kg/m².

The resin extruded from the die was passed through a forming means to have a desired cross-sectional shape, and thus was formed into a board which had a width of 330 mm, a thickness of 30 mm, and a fine uniform thin skin on the entire outer surface thereof. Cells in the board were uniformly distributed throughout the whole and had sizes within a range from about 0.4 to 0.6 mm. In order to confirm uniformity of the pores, both sides of the board were cut away by 15 mm, and the remaining board was further cut into five equal testing pieces, which were numbered from 1 to 5 in order. Density was measured of each of the testing pieces. As a result, it was found that the density was 29.7, 28.6, 28.7, 28.6, and 29.5 kg/m³, respectively, and the difference between the maximum and minimum was 1.1 kg/m³, which was small compared with the mean density of 29 kg/m³, and accordingly the board was regarded as uniformly foamed.

## Claims

1. A method for preparing a thermoplastic foam by extruding molten thermoplastic resin having a foaming agent distributed therein, including the steps of:

(a) introducing a mass of molten thermoplastic resin from a supply zone (1) into a mixing and cooling zone (3) and controlling the temperature of the cooling zone by fluid heat exchange, the mass being under pressure in said supply zone and in the cooling zone;

(b) passing the pressurized mass through said mixing and cooling zone while simultaneously intimately mixing the mass and lowering the temperature of the mass, the cooled mass being maintained in its molten flowable state;

(c) dividing the cooling mass into a plurality of separate, non-parallel streams in a zigzag mixer under substantially adiabatic conditions;

(d) separating and recombining at least a portion of said streams in said zigzag mixer under substantially adiabatic conditions to form a combined homogeneous mass having a substantially uniform temperature; and

(e) extruding the homogeneous mass into a lower pressure zone to form a substantially uniform thermoplastic foam.

2. A method according to claim 1, wherein prior to the final extrusion, said streams are further divided, separated and recombined.

3. A method according to claim 1 or 2 including the step of rotating at least some of said divided streams around the axis of the main flow.

4. A method according to claim 1, 2 or 3 wherein the substantially uniform thermoplastic foam is a board having a thickness greater than 10 mm.

5. Apparatus for preparing a substantially uniform thermoplastic foam from a supply of mixed molten thermoplastic resin having therein a foaming molten thermoplastic resin ahving therein a foaming agent for said resin, said apparatus including a cooling-mixing means (3) to be connected to said supply to receive said mass for mixing and substantially lowering the temperature of the mass, substantially adiabatic zigzag mixing means (5) connected to said cooling-mixing means (3) for dividing the cooling-mixing means (3) for dividing the cooled mass into a plurality of separate non-parallel streams and for separating and recombining at least a portion of said streams under substantially adiabatic conditions to form a combined homogeneous mass having a substantially uniform temperature, and die means (61, 62, 63) connected to said zigzag mixing means (5) for extruding said combined homogeneous mass into a lower pressure zone to form a substantially uniform thermoplastic foam.

6. Apparatus according to claim 5, wherein said cooling-mixing means includes an elongate barrel having an inlet (34) at one end for connection to said supply, an outlet (4) at the opposite site end connected to said zigzag mixing means (5), a jacket (31) surrounding said barrel and having a cooling medium inlet (36) and a cooling medium outlet (37), a cylindrical member (32) rotatably mounted in said barrel on the axis thereof, said member (32) defining with said barrel a passage (33) for the mass, a pipe (30) extending into the interior of said rotating member for supplying cooling medium thereto, and a plurality of projections (39) mounted on the outer surface of the member (32) extending into said passage to a position adjacent the inner surface of the barrel (3), each projection (39) also extending generally axially of said rotating member.

7. Apparatus according to claim 6, wherein each of said plurality of projections has at least one opening therein and comprises a pair of supports (392) extending radially from the outer surface and generally aligned with the central axis of the member (32) and a top bar (39) extending between said pair of supports.

8. Apparatus according to claim 6, wherein each of said plurality of projections (39) comprises a flat metal-plate blade (89) extending radially from the outer surface of the member (32) and generally aligned with the axis of the member (32), said blade (89) having an upper face and a hole (894) defining said opening, the axis of said hole (894) including an acute angle with a radius of the member (32) extending through the plate.

9. Apparatus according to claim 5, 6, 7 or 8, wherein said zigzag mixing means (5) includes a conduit connected between said cooling-mixing means (3) and said die means (61), at least one separating element (52) positioned in said conduit and defining a plurality of through passages, the directions of said passages being at an angle to the axis of said conduit, different passages being at different angles.

10. Apparatus according to claim 9, wherein said at least one separating element (52) includes a plurality of metal sheets (521, 522 . . .) extending in various directions in spaced and crossing relation to define said plurality of passages, and wherein said at least one separating element (52) is positioned in said conduit such that at least some surfaces of said metal sheets (521, 522 . . .) are inclined to the axis of the conduit and said passages are at different angles to the conduit axis.

11. Apparatus according to claim 10, wherein each of said metal sheets (521, 522 . . .) is a corrugated sheet, and said at least one separating member (52) is formed by placing a number of said corrugated sheets (521, 522 . . .) one on another with their peaks or valleys extending in different directions between the contiguous sheets, and fixing the sheets at their points of contact.

12. Apparatus according to claim 10, wherein said metal sheets (721, . . . 731 . . .) form a plurality of sets (72, 73, 74), the sheets of each set (72, 73, 74) lying in a plane, the sheets of one set being between the sheets of another set and fixed at contact points to form a crossing member, and the crossing members being further crossed and fixed to form the at least one separating member.

13. Apparatus according to claim 9, wherein the at least one separating member (52) is formed of a cylindrical block (100) having a number of apertures (102, . . . etc.) perforated therein and extending therethrough, the apertures forming said passages which are inclined with respect to the axis of the conduit, the directions of the apertures being different from that of adjacent apertures.

14. Apparatus according to any one of claims 9 to 13, wherein the at least one separating member (52) is rotatable.

## Patentansprüche

1. Verfahren zur Herstellung eines thermoplastischen Schaumstoffs durch Extrudieren eines geschmolzenen thermoplastischen Harzes, in dem ein Schaum- bzw. Treibmittel verteilt ist, umfassend die folgenden Stufen:

a) Einbringen der Masse des geschmolzenen Harzes aus einer Vorratszone (1) in eine Misch- und Kühlzone (3) und Regelung der Temperatur der Kühlzone durch Flüssigteitswärmeaustausch, wobei sich die Masse in der Vorratszone und in der Kühlzone unter Druck befindet,

b) Durchleiten der unter Durck stehenden Masse durch die Misch- und Kühlzone, während die Masse gleichzeitig innig vermischt wird und Verringerung der Temperatur der Masse, wobei die gekühlte Masse in geschmolzenem fließfähigen Zustand gehalten wird,

c) Aufteilung der kühlen Masse in eine Mehrzahl getrennter nicht paralleler Ströme in einem Zick-Zack-Mischer unter im wesentlichen adiabatischen Bedingungen

d) Trennung und erneute Vereinigung zumindest eines Teils dieser Ströme in der Zick-Zack-Mischer unter im wesentlichen adiabatischen Bedingungen, unter Bildung einer kombinierten homogenen Masse mit einer im wesentlichen gleichmäßigen Temperatur und

e) Extrudieren der homogenen Masse in eine Zone niedrigeren Druckes unter Bildung eines im wesentlichen gleichförmigen thermoplastischen Schaumstoffs.

2. Verfahren nach Anspruch 1, wobei die Ströme vor der Endextrusion nochmals geteilt, voneinander getrennt und wieder zusammengeführt werden.

3. Verfahren nach Anspruch 1 oder 2, umfassend eine Stufe, bei der zumindest einige der voneinander getrennten Ströme um die Achse des Hauptstromes geführt werden.

4. Verfahren nach Anspruch 1, 2 oder 3, wobei der im wesentlichen gleichförmige thermoplastische Schaumstoff eine Platte mit einer Dicke von mehr als 10 mm ist.

5. Vorrichtung zur Herstellung eines im wesentlichen gleichförmigen thermoplastischen Schaumstoffes aus einem Vorrat eines gemischten, geschmolzenen thermoplastischen Harzes, in dem ein Treibmittel für das Harz enthalten ist, wobei die Vorrichtung umfaßt eine Kühl-Misch-Einrichtung (3), die mit dem Vorrat zu verbinden ist, um die Masse zum Mischen und zur im wesentlichen adiabatischen Temperaturerniedrigung aufzunehmen, eine Zick-Zack-Mischeinrichtung (5), die mit der Kühl-Misch-Einrichtung (3) verbunden ist, um die gekühlte Masse in eine Mehrzahl getrennter nicht paralleler Ströme aufzuteilen und zumindest einen Teil dieser Ströme unter Bildung einer kombinierten homogenen Masse mit einer im wesentlichen gleichmäßigen Temperatur unter im wesentlichen adiabatischen Bedingungen zu trennen und zu vereinigen und Formeinrichtung (61, 62, 63), die mit der Zick-Zack-Mischeinrichtung (5) verbunden sind, um die kombinierte homogene Masse in eine Zone niedrigeren Druckes zu extrudieren unter Bildung eines im wesentlichen gleichförmigen thermoplastischen Schaumstoffs.

6. Vorrichtung nach Anspruch 5, wobei die Kühl-Misch-Einrichtung ein längliches Rohr mit einem Einlaß (34) an einem Ende zur Verbindung mit der Vorratszone, einem Auslaß (4) an der gegenüberliegenden Seite, verbunden mit der Zick-Zack-Mischeinrichtung (5), einen Mantel (31), der das Rohr umgibt und einen Einlaß (36) für das Kühlmedium und einen Auslaß (37) für das Kühlmedium aufweist, ein zylindrisches Teil (32), das drehbar in dem Rohr auf dessen Achse angeordnet ist, wobei das Teil (32) mit dem Rohr einen Durchgang (33) für die Masse bildet, eine Leitung (30), die sich in das Innere des drehbaren Teils erstreckt, um diesem Kühlmedium zuzuführen, und eine Mehrzahl von Einbauten (39), die auf der Außenseite des Teils (32) angeordnet sind und sich in den Durchgang erstrecken bis nahe an die Innenseite des Rohres (3), wobei sich jede der Einbauten (39) auch allgemein entlang der Achse des drehbaren Teils erstreckt.

7. Vorrichtung nach Anspruch 6, wobei jede der Mehrzahl der Einbauten zumindest eine Öffnung aufweist und ein Paar von Trägern bzw. Stützelementen (392) umfaßt, die radial von der Außenseite weggehen und im allgemeinen in Richtung der Mittelachse des Teils (32) ausgerichtet sind, und eine Auflage (39), die sich zwischen den beiden Stützelementen erstreckt.

8. Vorrichtung nach Anspruch 6, wobei jede der Mehrzahl von Einbauten (39) eine Ablenkplatte (89) aus Blech umfaßt, die sich radial von der Außenseite des Teils (32) erstreckt und allgemein in Richtung der Achse des Teils (32) ausgerichtet ist, wobei die Ablenkplatte (89) eine obere Fläche und eine Bohrung (894) aufweist, die die Öffnung bildet, die sich durch die Platte hindurch erstreckt, wobei die Achse der Bohrung (894) mit einem Radius des Teils (32) einen spitzen Winkel bildet.

9. Vorrichtung nach Anspruch 5, 6, 7 oder 8, wobei die Zick-Zack-Mischeinrichtung (5) eine Verbindungumfaßt, die sich zwischen der Kühl-Misch-Einrichtung (3) und dem Formteil (61) erstreckt, wobei zumindest ein Trennelement (52) in der Verbindung angebracht ist und eine Mehrzahl von Durchgängen bildet, wobei die Richtung dieser Durchgänge einen Winkel mit der Achse der Leitung bildet und wobei unterschiedliche Durchgänge unterschiedliche Winkel bilden.

10. Vorrichtung nach Anspruch 9, wobei zumindest ein Trennelement (52) eine Mehrzahl von Blechen (521, 522 ...) umfaßt, die sich in verschiedenen Richtungen im Abstand voneinander erstrecken und sich kreuzen unter Bildung einer Mehrzahl von Durchgangen und wobei sich zumindest ein Trennelement (52) so in der Verbindungbefindet, daß zumindest einige Flächen der Bleche (521, 522 ...) gegenüber der Achse der Verbindunggeneigt sind und die Durchgänge unterschiedliche Winkel gegenüber der Achse der Verbindung bilden.

11. Vorrichtung nach Anspruch 10, wobei jedes der Bleche (521, 522 ...) ein gewelltes Blech ist und zumindest ein Trennelement (52) gebildet wird, indem eine Anzahl der gewellten Bleche (521, 522 ...) eins an dem anderen, wobei sich die Spitzen oder Vertiefungen benachbarter Bleche in unterschiedliche Richtungen erstrecken, angeordnet wird und die Bleche an ihren Berührungspunkten fest miteinander verbunden sind.

12. Vorrichtung nach Anspruch 10, wobei die Bleche (721 ..., 731 ...) eine Mehrzahl von Einheiten (72, 73, 74) bilden, wobei die Bleche jeder Einheit (72, 73, 74) in einer Ebene liegen und die Bleche einer Einheit zwischen den Blechen einer anderen Einheit angeordnet und an den Berührungspunkten fest miteinander verbunden sind unter Bildung eines miteinander verkreuzten Teiles und die verkreuzten Teile weiter verkreuzt fest miteinander verbunden werden unter Bildung zumindest enes Trennelements.

13. Vorrichtung nach Anspruch 9, wobei zumindest ein Trennelement (52) aus einem zylindrischen Block (100) besteht, der eine Anzahl von Öffnungen (102 ... usw.) aufweist, die sich durch ihr hindurcherstrecken, wobei die Öffnungen Durchgänge bilden, die gegenüber der Achse der Verbindung geneigt sind und wobei die Richtung der Öffnungen von derjenigen benachbarter Öffnungen verschieden ist.

14. Vorrichtung nach einem der Ansprüche 9 bis 13, wobei zumindest ein Trennelement (52) drehbar angeordnet ist.

**Revendications**

1. Procédé pour préparer une mousse thermoplastique par extrusion d'une résine thermoplastique fondue dans laquelle a été réparti un agent porophore, comprenant les stades de:

a) introduction d'une masse de résine thermoplastique fondue d'une zone (a) d'alimentation dans une zone (3) de mélange et de refroidissement et réglage de la température de la zone de refroidissement par un échange de chaleur par fluide, la masse étant sous pression dans la zone d'alimentation et dans la zone de refroidissement;

b) passage de la masse sous pression dans la zone de mélange de refroidissement pendant que cette masse est simultanément mélangée intimement et abaissement de la température de la masse, la masse refroidie étant maintenue dans son état fondu fluide;

c) division de la masse refroidie en une pluralité de courants séparés, non parallèles dans un malaxeur en zig-zag sous conditions sensiblement adiabatiques;

d) séparation et réunion d'au moins une partie de ces courants, dans ledit malaxeur en zig-zag sous conditions sensiblement adibatiques, pour former une masse homogène combinée ayant une température sensiblement uniforme; et

e) extrusion de la masse homogène dans une zone à basse pression pour former une mousse thermoplastique sensiblement uniforme.

2. Procédé suivant la revendication 1, dans lequel, préalablement à l'extrusion finale, ces courants sont davantage divisés, séparés et réunis.

3. Procédé selon la revendication 1 ou 2, comprenant le stade de mise en rotation d'au moins certains des courants divisés autour de l'axe d'écoulement principal.

4. Procédé selon la revendication 1, 2 ou 3, dans lequel la mousse thermoplastique sensiblement uniforme est une plaque dont l'épaisseur est supérieure à 10 mm.

5. Dispositif pour préparer une mousse thermoplastique sensiblement uniforme à partir d'une alimentation en résine thermoplastique mélangée et fondue, contenant un agent porophore pour cette résine, ce dispositif comprenant un moyen (3) de mélange et de refroidissement qui doit être raccordé à l'alimentation pour recevoir la masse afin de la mélanger et d'abaisser sensiblement sa température, un moyen (5) de malaxage en zig-zag sensiblement adiabatiques, raccordé au moyen (3) de mélange et de refroidissement pour diviser la masse refroidie en une pluralité de courants séparés, non parallèles, et pour séparer et réunir au moins une partie de ces courants, dans des conditions sensiblement adiabatiques, afin de former une masse homogène combinée ayant une température sensiblement uniforme, et des moyens (61, 62, 63) formant filière reliés au moyen (5) de malaxage pour extruder cette masse homogène combinée dans une zone à basse pression pour former une mousse thermoplastique sensiblement uniforme.

6. Appareil selon la revendication 5, dans lequel le moyen de mélange et de refroidissement comprend un tambour allongé ayant une entrée (34) à une extrémité pour pouvoir être raccordé à l'alimentation, une sortie (4) à l'extrémité opposée raccordée au moyen (5) de malaxage en zig-zag, une jaquette (31) entourant le tambour et comprenant une entrée (36) pour un agent de refroidissement et une sortie (37) pour cet agent de refroidissement, un élément cylindrique (32) monté fou dans le tambour sur l'axe de ce dernier, cet élément (32) formant avec le tambour un passage (33) pour la masse, un tube (30) se prolongeant à l'intérieur de cet élément rotatif pour amener à ce dernier l'agent de refroidissement et, une pluralité d'éléments (39) en saillie montés sur la surface extérieure de l'élément cylindrique (32) et se prolongeant dans le passage jusqu'en un point continu à la surface intérieure du tambour (3), chacun de ces éléments (39) en saillie se prolongeant également dans son ensemble axialement à l'élément rotatif.

7. Dispositif selon la revendication 6, dans lequel chacun des éléments en saillie comporte au moins une ouverture et comprend deux supports (392) qui se prolongent radialement à partir de la surface extérieure et qui sont dans leur ensemble dans l'alignement de l'axe de l'élément (32) et un barreau supérieur (39) qui se prolonge entre les deux supports.

8. Dispositif selon la revendication 6, dans lequel chacun des éléments (39) en saillie comprend une ailette plate (89) formée d'une plaque métallique qui se prolonge radialement à partir de la surface extérieure de l'élément (32) et qui est dans son ensemble dans l'alignement de l'axe de l'élément (32), cette ailette (89) comportant une face supérieure et un trou (894) formant dans ladite ouverture, l'axe de ce trou (894) formant un angle aigu avec le prolongement avec un rayon de l'élément (32) s'étendant à travers la plaque.

9. Appareil selon la revendication 5, 6, 7 ou 8, dans lequel le moyen (5) de malaxage en zig-zag comprend un conduit placé entre le moyen (3) de mélange et de refroidissement et le moyen (61) formant filière, au moins un élément (52) de séparation placé dans ce conduit et formant une pluralité de passages traversants, les directions de ce passage étant inclinées par rapport à l'axe du conduit, les différents passages faisant des angles différents.

10. Dispositif selon la revendication 9, dans lequel ledit élément (52) de séparation comprend une pluralité de tôles métalliques (521, 522 ...) qui se prolongent dans la direction variée en s'écartant et en se croisant de maniére à former la pluralité de passages; et dans lequel au moins cet élément (52) de séparation est placé dans le conduit de telles manière qu'au moins certaines surfaces de ces tôles métalliques (521, 522 ...) sont inclinées sur l'axe du conduit et que les passages font des angles différents avec l'axe du conduit.

11. Dispositif selon la revendication 11, dans lequel chacune des tôles métalliques (521, 522 ...) est une tôle ondulée, ledit élément (52) de séparation est formé par empilage de plusieurs desdites tôles ondulées (521, 522 ...) les unes sur les autres, leurs sommets et leurs bases se prolongeant dans les directions différentes entre les tôles contigües, et par fixation des tôles à leur point de contact.

12. Dispositif selon la revendication 10, dans lequel lesdites tôles métalliques (721 ... 731 ...) forment une pluralité de groupe (72, 73, 74) se trouvant dans un plan, les tôles d'un groupe se trouvant entre les tôles d'un autre groupe et étant fixées au point de contact afin de former un élément croisé, et les éléments croisés étant en outre croisés et fixés pour former ledit élément de séparation.

13. Appareil selon la revendication 9, dans lequel l'élément (52) de séparation est formé d'un bloc cylindrique (100) comportant plusieurs ouvertures (102 ... etc) qui y sont percées et qui le traversent, ces ouvertures formant lesdits passages qui sont inclinés par rapport à l'axe du conduit, les directions des ouvertures étant différentes de celles des ouvertures contigües.

14. Dispositif selon l'une quelconque des revendications 9 à 13, dans lequel ledit élément (52) de séparation est rotatif.

0 066 977

Fig. 1.

Fig. 2.

393. 39 394 *Fig. 3.*

392

32

L₁ L₂ *Fig. 4.*

T 31

393 395 397

396 H

C W

32 394 391

Fig. 5.

(a)  Fig. 6.

(b) (c)

*Fig. 7.*

*Fig. 8.*

*Fig. 9.*